(19) **Europäisches Patentamt / European Patent Office / Office européen des brevets**

(11) **EP 4 256 274 B1**

(12) **FASCICULE DE BREVET EUROPEEN**

(45) Date de publication et mention de la délivrance du brevet:
**15.10.2025 Bulletin 2025/42**

(21) Numéro de dépôt: **21831251.0**

(22) Date de dépôt: **02.12.2021**

(51) Classification Internationale des Brevets (IPC):
**G01C 21/20** *(2006.01)* **G05D 1/00** *(2024.01)*

(52) Classification Coopérative des Brevets (CPC):
**G01C 21/20; G08G 5/22; G08G 5/32; G08G 5/53; G08G 5/56; G08G 5/74; G08G 5/76;** G08G 5/55

(86) Numéro de dépôt international:
**PCT/EP2021/084055**

(87) Numéro de publication internationale:
**WO 2022/117765 (09.06.2022 Gazette 2022/23)**

(54) **PROCÉDÉ ET DISPOSITIF DE GÉNÉRATION DE TRAJECTOIRE D'UN APPAREIL MOBILE RESPECTANT UNE CONTRAINTE TEMPORELLE PRÉDÉTERMINÉE**

VERFAHREN UND VORRICHTUNG ZUR ERZEUGUNG DES WEGES EINER SICH BEWEGENDEN VORRICHTUNG INNERHALB EINER VORGEGEBENEN ZEITEINSCHRÄNKUNG

METHOD AND DEVICE FOR GENERATING THE PATH OF A MOVING APPARATUS WITHIN A PREDETERMINED TIME CONSTRAINT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **04.12.2020 FR 2012674**

(43) Date de publication de la demande:
**11.10.2023 Bulletin 2023/41**

(73) Titulaire: **THALES
92400 Courbevoie (FR)**

(72) Inventeurs:
• **GAYRAUD, Lionel
  91767 PALAISEAU (FR)**
• **SAVEANT, Pierre
  91767 PALAISEAU CEDEX (FR)**
• **BARRERE, Rémi
  91767 PALAISEAU (FR)**

(74) Mandataire: **Lavoix
2, place d'Estienne d'Orves
75441 Paris Cedex 09 (FR)**

(56) Documents cités:
EP-A1- 2 107 005     EP-A1- 2 128 731
WO-A1-2010/076045     FR-A1- 2 916 842

**EP 4 256 274 B1**

**Description**

La présente invention concerne un procédé de génération de trajectoire d'un appareil mobile, respectant une contrainte temporelle prédéterminée, entre un point de départ et un point d'arrivée, ledit appareil mobile ayant des contraintes de déplacement prédéterminées. L'invention concerne également un dispositif associé, et un produit programme d'ordinateur associé.

L'invention se situe dans le domaine de la commande de déplacement d'appareils mobiles, par exemple aériens, marins ou sous-marins, et en particulier de la génération de trajectoires de déplacement des appareils mobiles qui respectent des contraintes temporelles, également appelés trajectoires synchronisées.

Pour deux appareils mobiles distincts, deux trajectoires sont dites synchronisées si elles respectent une contrainte temporelle, par exemple l'arrivée en un même point, dit point d'arrivée, dans une plage temporelle prédéterminée, ou dans des plages successives prédéterminées. Bien entendu, cela est généralisable à un nombre quelconque d'appareils mobiles supérieur à deux.

Pour un seul appareil mobile, la synchronisation consiste à fixer une plage temporelle d'arrivée, par exemple par rapport à un objectif à atteindre, ou, de manière équivalente, une plage de durée de trajectoire donnée. Ainsi, pour chaque appareil mobile ayant des contraintes de déplacement, par exemple une vitesse de déplacement minimale et une vitesse de déplacement maximale, ou, dans certaines applications, une vitesse de déplacement constante, il convient de générer une trajectoire de durée comprise dans une plage de durée de trajectoire, pour assurer la synchronisation au point d'arrivée.

L'invention trouve notamment une application particulière dans le domaine de la planification coopérative de trajectoires pour des appareils mobiles, par exemple des aéronefs sans pilote à bord, pour des missions données. Par exemple, pour une mission donnée, civile ou militaire, les aéronefs sans pilote à bord doivent se rendre à un point d'arrivée de manière coordonnée temporellement, en partant de points de départ distincts. Alternativement, plusieurs appareils mobiles de types différents sont à coordonner, par exemple des appareils mobiles ayant des contraintes de déplacement différentes (e.g. vitesse minimale, vitesse maximale).

En plus des contraintes de déplacement, des contraintes relatives aux routes possibles sont imposées, ces contraintes pouvant être dues à des conditions naturelles (reliefs, courants, météo) ou à des conditions externes imposées (e.g. zones de passage, zones à éviter, zones à survoler).

Un problème consiste alors à générer des trajectoires synchronisées pour tous les appareils mobiles considérés. Dans le cas particulier d'une arrivée coordonnée à un point d'arrivée, la synchronisation prend en considération l'appareil mobile le plus lent. Pour les autres appareils, une trajectoire de durée augmentée est calculée.

Les documents EP 2128731 A1, EP 2107005 A1, FR 2 916 842 A1 et WO 2010/076045 décrivent des procédés de détermination de trajectoires pour un mobile entre un point de départ et un point d'arrivée.

On connaît des publications scientifiques concernant la synchronisation d'appareils mobiles, décrivant notamment des méthodes calculatoires basées sur des modélisations mathématiques, qui nécessitent en général un temps de calcul élevé ou qui génèrent des trajectoires qui sont trop contraintes topologiquement.

L'invention a pour objet de remédier aux inconvénients de l'état de la technique.

A cet effet, l'invention propose, selon un aspect, un procédé de génération de trajectoire d'un appareil mobile, respectant une contrainte temporelle prédéterminée, entre un point de départ et un point d'arrivée, ledit appareil mobile ayant des contraintes de déplacement prédéterminées, le procédé étant mis en œuvre par un processeur d'un dispositif de calcul programmable. Ce procédé comporte des étapes de :

-  calcul d'un maillage d'une zone de déplacement de l'appareil mobile, lesdits point de départ et point d'arrivée appartenant à ladite zone de déplacement, ledit maillage étant formé par un ensemble d'éléments de maillage adjacents,
-  calcul d'une carte de coût associant au moins une valeur de coût à chaque élément de maillage,
-  calcul par une méthode de propagation de front d'onde utilisant le maillage et la carte de coût calculée, d'une première carte de coût intégré associée au point de départ, et d'une deuxième carte de coût intégré associée au point d'arrivée,
-  détermination d'une trajectoire détournée reliant le point de départ et le point d'arrivée via un point de détour appartenant à la zone de déplacement, en utilisant lesdites première et deuxième cartes de coût intégré, la longueur de la trajectoire détournée déterminée étant compatible avec ladite contrainte temporelle prédéterminée.

Avantageusement, le procédé de l'invention met en œuvre le calcul d'une première carte de coût intégré associée au point de départ, et une deuxième carte de coût intégré associée au point d'arrivée, et ces cartes sont utilisables pour la génération de trajectoires détournées, respectant la contrainte temporelle tout en étant optimisées selon une stratégie de coût. Avantageusement, la génération de trajectoires est parallélisable, ce qui permet une optimisation calculatoire.

Le procédé de génération de trajectoire selon l'invention peut également présenter une ou plusieurs des caractéristiques ci-dessous, prises indépendamment ou selon toutes les combinaisons techniquement envisageables :
La détermination de trajectoire comprend :

- une sélection d'au moins un point de détour candidat, appartenant à la zone de déplacement, et
- une génération d'une trajectoire reliant le point de départ, le point de détour candidat et le point d'arrivée en utilisant ladite première carte de coût intégré pour calculer une première demi-trajectoire entre le point de départ et le point de détour candidat, et en utilisant ladite deuxième carte de coût intégré pour calculer une deuxième demi-trajectoire entre le point de détour candidat et le point d'arrivée, la trajectoire générée étant formée par la réunion desdites première et deuxième demi-trajectoire,
- une vérification de compatibilité de la longueur de la trajectoire générée avec ladite contrainte temporelle prédéterminée.

Le procédé comporte une répétition des étapes de sélection d'un point de détour candidat et de génération de trajectoire, pour une pluralité de points de détour candidats, selon une stratégie de retardement prédéfinie.

La première demi-trajectoire est calculée par une méthode de descente de gradient de manière à obtenir le chemin le plus court, au sens de la première carte de coût intégré, entre le point de départ et le point de détour candidat, et la deuxième demi-trajectoire est calculée par une méthode de descente de gradient de manière à obtenir le chemin le plus court, au sens de la deuxième carte de coût intégré, entre le point de détour candidat et le point d'arrivée.

La méthode de propagation de front d'onde met en œuvre un propagateur eikonal.

Le maillage est un maillage régulier.

Le maillage est un maillage irrégulier.

Le maillage est isotrope, chaque élément de maillage ayant une valeur de coût ou une fonction de coût analytique associée.

Le maillage est anisotrope, au moins un élément de maillage a une pluralité de valeurs de coût associées, dépendant d'une direction de parcours dudit élément de maillage.

Une carte de coût est calculée par combinaison d'une pluralité de cartes de coût initiales selon une stratégie de coût prédéterminée.

Le procédé comporte en outre une étape de détermination d'une plage de longueurs de trajectoire satisfaisant la contrainte temporelle et les contraintes de déplacement de l'appareil mobile.

Selon un autre aspect, l'invention concerne un dispositif de génération de trajectoire d'un appareil mobile, respectant une contrainte temporelle prédéterminée, entre un point de départ et un point d'arrivée, ledit appareil mobile ayant des contraintes de déplacement prédéterminées, comportant un processeur configuré pour mettre en œuvre :

- un module de calcul d'un maillage d'une zone de déplacement de l'appareil mobile, lesdits point de départ et point d'arrivée appartenant à ladite zone de déplacement, ledit maillage étant formé par un ensemble d'éléments de maillage adjacents,
- un module de calcul d'une carte de coût associant au moins une valeur de coût à chaque élément de maillage,
- un module de calcul par une méthode de propagation de front d'onde utilisant le maillage et la carte de coût calculée d'une première carte de coût intégré associée au point de départ, et d'une deuxième carte de coût intégré associée au point d'arrivée,
- un module de détermination d'une trajectoire détournée reliant le point de départ et le point d'arrivée via un point de détour appartenant à la zone de déplacement, en utilisant lesdites première et deuxième cartes de coût intégré, la longueur de la trajectoire détournée déterminée étant compatible avec ladite contrainte temporelle prédéterminée.

Selon un autre aspect, l'invention concerne un programme d'ordinateur comportant des instructions logicielles qui, lorsqu'elles sont implémentées par un dispositif électronique programmable, mettent en œuvre un procédé de génération de trajectoire tel que brièvement décrit ci-dessus.

D'autres caractéristiques et avantages de l'invention ressortiront de la description qui en est donnée ci-dessous, à titre indicatif et nullement limitatif, en référence aux figures annexées, parmi lesquelles :

[Fig 1] la figure 1 est un exemple schématique de trajectoires synchronisées d'appareils mobiles ;
[Fig 2] la figure 2 est un système de guidage d'appareil mobile comprenant un dispositif de génération de trajectoire respectant une contrainte temporelle ;
[Fig 3] la figure 3 est un logigramme des principales étapes d'un procédé de génération de trajectoire selon un mode de réalisation ;
[Fig 4] la figure 4 est un exemple schématique de maillage régulier ;
[Fig 5] la figure 5 est un exemple schématique de maillage irrégulier ;
[Fig 6] la figure 6 est un exemple de carte de coût et de carte de coût intégré associée à la carte de coût.

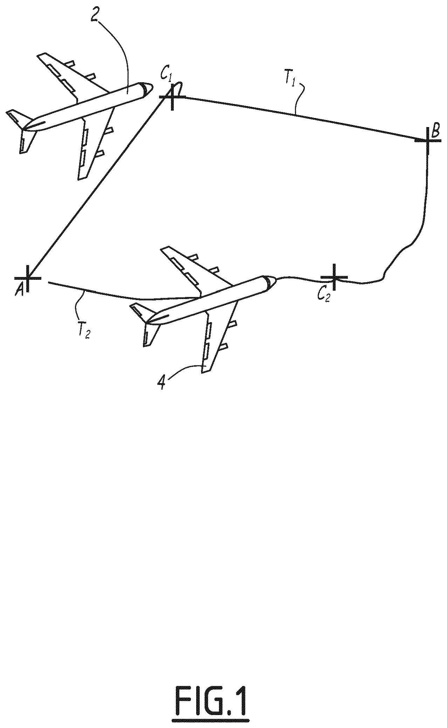

La figure 1 illustre schématiquement un scénario d'application de l'invention. Deux appareils mobiles 2, 4, par exemple des aéronefs sans pilote à bord, se déplacent d'un point de départ A vers un point d'arrivée B, avec des contraintes de synchronisation.

Il est entendu que l'invention n'est pas limitée à un type particulier d'appareil mobile, et trouve des applications pour des appareils mobiles aériens, marins, sous-marins, terrestres. Il est également entendu que l'invention ne se limite pas à synchroniser ces appareils en un point unique de rendez-vous.

Le procédé de génération de trajectoire s'applique pour chaque appareil mobile, les contraintes temporelles, notamment une contrainte de durée de la trajectoire, étant appliquées à chaque appareil mobile, en fonction d'une mission à effectuer.

Chaque appareil 2, 4 de l'exemple de la figure 1 se déplace selon une trajectoire $T_1$, $T_2$ calculée, en passant par un point de détour $C_1$, $C_2$ introduit pour respecter une contrainte temporelle donnée, selon un procédé décrit plus en détail ci-après. Une trajectoire passant par un point de détour est une trajectoire détournée, ou retardée, pour respecter une contrainte temporelle donnée.

Dans la suite, l'invention sera décrite en référence à un seul appareil mobile, mais il est entendu qu'elle s'applique de manière analogue pour N appareils mobiles, avec N supérieur ou égal à 2.

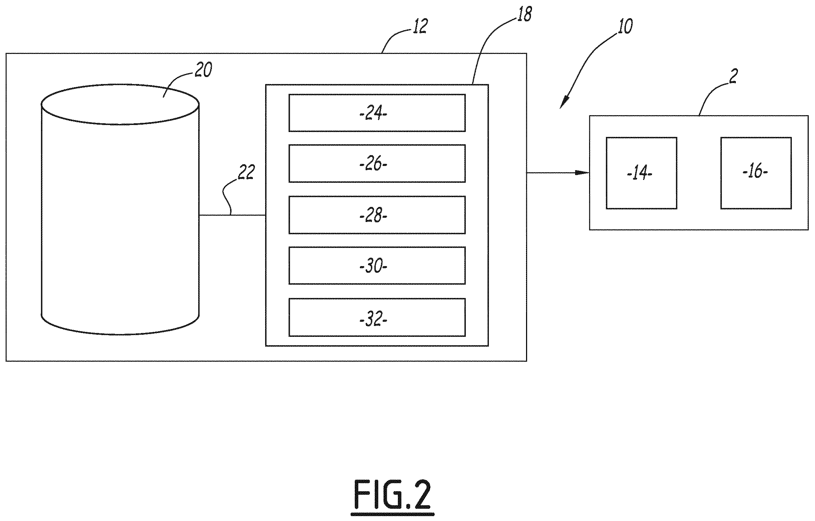

La figure 2 illustre schématiquement un exemple de système de guidage 10 d'appareil mobile 2 dans lequel l'invention est appliquée.

L'appareil mobile 2 (représenté sur la figure 1) est par exemple un aéronef, de type avec ou sans pilote à bord.

L'appareil mobile a des contraintes de déplacement, qui sont soit dues à des limitations mécaniques ou aérodynamiques, soit dues à des limitations d'acceptabilité pour le pilote ou pour la mission effectuée. Les contraintes de déplacement incluent notamment une vitesse minimale et une vitesse maximale.

Dans le système de guidage 10, l'appareil mobile 2 reçoit des commandes de guidage d'un dispositif de calcul 12. Par exemple, le dispositif de calcul 12 est situé dans un centre de calcul au sol, et les commandes de guidage sont communiquées à l'appareil mobile 2 via une liaison de communication sans fil. En variante, le dispositif de calcul 12 est embarqué par l'appareil mobile 2.

Le dispositif de calcul 12 est configuré pour calculer une ou plusieurs trajectoires selon le procédé de génération de trajectoire respectant une contrainte temporelle prédéterminée, décrit plus en détail ci-après.

Par exemple, la génération de trajectoires est effectuée dans le cadre d'une planification de mission de l'appareil mobile 2, pour une planification collaborative avec d'autres appareils mobiles non représentés.

La planification de mission implique la prise en considération de nombreuses contraintes de fonctionnement et d'environnement.

Des trajectoires sont dites synchronisées lorsque l'arrivée à un point d'arrivée s'effectue dans une plage temporelle prédéterminée.

De manière équivalente, la contrainte de synchronisation est satisfaite si pour un appareil mobile, la trajectoire de déplacement entre un point A de départ et un point B d'arrivée a une durée T comprise dans une plage temporelle de durée donnée, par exemple comprise entre $T_{min}$ et $T_{max}$, l'appareil mobile ayant une vitesse comprise entre $V_{min}$ et $V_{max}$. La longueur de la trajectoire correspondante est comprise dans la plage de longueurs:

$$[MATH\ 1]\ [T_{min} \times V_{min}, T_{max} \times V_{max}].$$

Le dispositif de calcul 12 est configuré pour générer une trajectoire détournée (ou retardée) en fonction de la contrainte temporelle donnée, et transmettre des commandes de guidage, selon la trajectoire obtenue, à l'appareil mobile 2.

Une trajectoire est définie par une liste de points à parcourir, les points étant définis par des coordonnées spatiales dans un référentiel spatial donné, et par un tracé, par exemple modélisable par des droites/courbes, entre les points successifs.

L'appareil mobile 2 comprend notamment un ordinateur de bord 14 et un système de commande du mouvement 16. Par exemple, l'ordinateur de bord 14 transforme la trajectoire en commandes de guidage, par exemple des commandes d'accélérations longitudinales, mouvements de gouverne etc. qui sont transmises au système de commande de mouvement 16.

Le dispositif de calcul 12 est par exemple un système informatique composé d'un ou plusieurs dispositifs électroniques programmables, i.e. des ordinateurs.

Pour simplifier l'explication, on considère que le dispositif de calcul 12 est un ordinateur comportant un processeur 18 et une unité de mémoire électronique 20, adaptés à communiquer via un bus de communication 22. Ce dispositif de calcul 12 est configuré pour mettre en œuvre l'invention.

Le processeur 18 du dispositif de calcul 12 est configuré pour mettre en œuvre un module 24 de maillage d'une zone de déplacement, un module 26 de calcul d'une carte de coût associée au maillage, un module 28 de calcul de deux cartes de coût intégré, comportant une première carte de coût intégré associée au point de départ, et une deuxième carte de coût intégré associée au point d'arrivée, par application d'une méthode de propagation de front d'onde, un module 30 de détermination d'un ou plusieurs points de détour et un module 32 de génération de trajectoire(s) détournées, chaque trajectoire détournée ayant un passage par un point de détour.

Le maillage calculé, la carte de coût associée au maillage, la première carte de coût intégré associée au point de départ, et la deuxième carte de coût intégré associée au point d'arrivée, sont mémorisés dans l'unité de mémoire électronique 20.

Les modules 24, 26, 28, 30 et 32 sont adaptés à coopérer, comme décrit plus en détail ci-après, pour mettre en œuvre un procédé de génération de trajectoire respectant une contrainte temporelle prédéterminée.

Dans un mode de réalisation, les modules 24, 26, 28, 30 et 32 sont réalisés sous forme d'instructions logicielles formant un programme d'ordinateur, qui, lorsqu'il est exécuté par un ordinateur, met en œuvre un procédé de génération de trajectoire selon l'invention.

En variante non représentée, les modules 24, 26, 28, 30 et 32 sont réalisés chacun sous forme de composants logiques programmables, tels que des FPGA (de l'anglais *Field Programmable Gate Array*), des microprocesseurs, des composants GPGPU (de l'anglais *General-purpose processing on graphies processing*), ou encore de circuits intégrés dédiés, tels que des ASIC (de l'anglais *Application Specific Integrated Circuit).*

Le programme d'ordinateur comportant des instructions logicielles est en outre apte à être enregistré sur un support, non représenté, lisible par ordinateur. Le support lisible par ordinateur est par exemple, un médium apte à mémoriser les instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple EPROM, EEPROM, FLASH, NVRAM), une carte magnétique ou une carte optique.

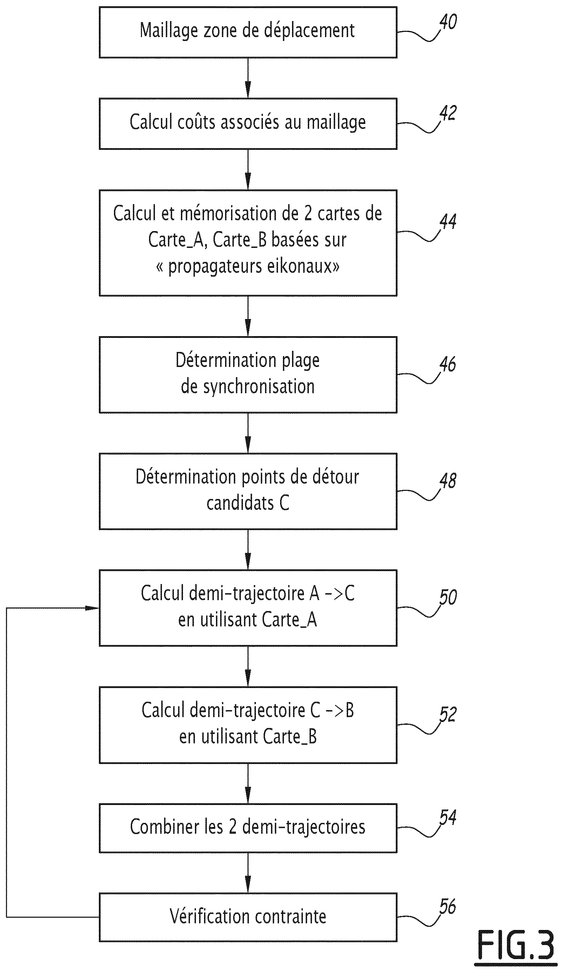

La figure 3 est un logigramme des principales étapes d'un mode de réalisation d'un procédé de génération de trajectoire respectant une contrainte temporelle, mis en œuvre par un processeur d'un dispositif de calcul programmable.

Il s'agit d'une trajectoire d'un appareil mobile, partant d'un point de départ (point A) vers un point d'arrivée (point B). Les coordonnées spatiales, dans un référentiel prédéterminé, des points de départ A et d'arrivée B sont fournies en entrée du procédé et mémorisées. Le référentiel prédéterminé est un référentiel 2D ou 3D.

Le procédé comporte une étape 40 de calcul d'un maillage d'une zone de déplacement, qui comporte les points de départ et d'arrivée. La zone de déplacement est une zone 2D définie dans un plan ou une zone 3D définie dans un référentiel à 3 dimensions. La trajectoire de l'appareil mobile sera définie par un ensemble de points appartenant à la zone de déplacement.

Le maillage comprend la division de la zone de déplacement en un ensemble d'éléments de maillage adjacents, également appelés pixels.

Le maillage est par exemple un maillage régulier, les éléments de maillage étant des carrés ou des losanges.

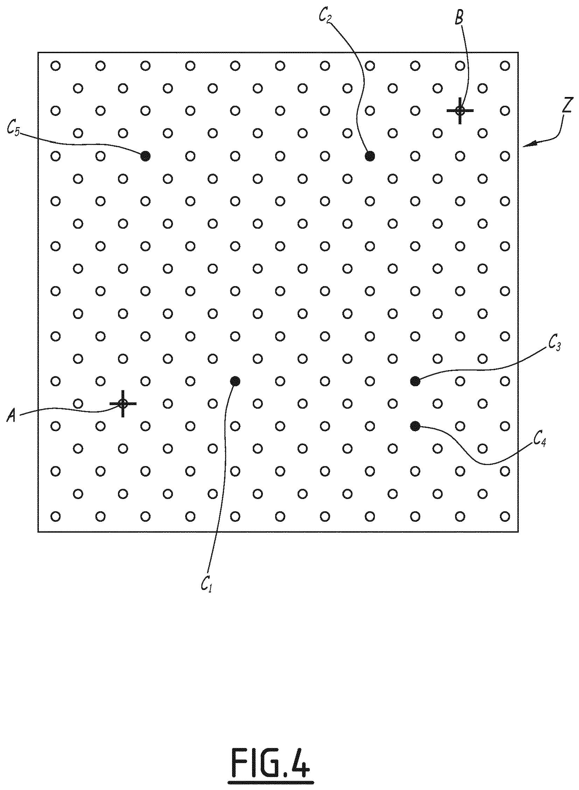

Un exemple de maillage régulier d'une zone de déplacement Z est illustré à la figure 4.

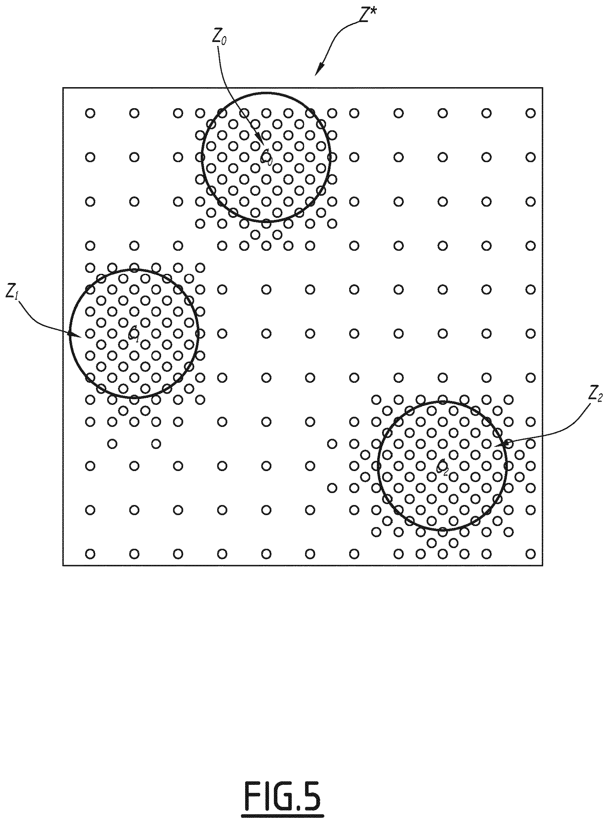

En variante, un maillage non régulier Z* tel que représenté à la figure 5 est généré, par exemple en appliquant l'algorithme de Maubach décrit dans l'article « Local Bisection Refinement for N-Simplicial Grids Generated by Reflection" de J M Maubach publié dans SIAM Journal on Scientific Computing en 1995. Ce dernier consiste à affiner localement un maillage jusqu'à satisfaction d'un critère sur le pas de maillage local, le pas de maillage étant la distance entre les centres de deux pixels adjacents. Cela permet de concentrer les pixels dans certains types de zones dans lesquels on souhaite concentrer la précision des calculs. Par exemple, des zones $Z_0$, $Z_1$ et $Z_2$ à maillage affiné sont représentées à la figure 5.

La génération du maillage dépend également du choix d'une stratégie de coût associée.

Le maillage généré est mémorisé.

De retour à la figure 2, l'étape 40 de maillage de la zone de déplacement est suivie d'une étape 42 de calcul de coûts associés au maillage, consistant à associer un coût à chacun des éléments du maillage, selon une stratégie de coût donnée.

Le coût associé au maillage est choisi en fonction de l'application envisagée.

Par exemple, le coût est choisi en fonction d'un niveau de facilité ou de difficulté de déplacement pour parcourir chaque élément de maillage, par exemple en fonction de conditions géographiques ou météorologiques (e.g. courants aériens, courants marins, type de sol) ou de conditions externes (e.g. présence de routes ou de zones infranchissables, présence d'obstacles ou de menaces etc).

Dans un mode de réalisation, la stratégie de coût est une stratégie dite isotrope : le coût associé à un élément de maillage ne dépend pas d'une direction de parcours de cet élément de maillage, et la valeur de coût associée à chaque élément de maillage est fixe, par exemple un nombre prédéterminé ou fourni par une fonction analytique.

Dans un autre mode de réalisation, la stratégie de coût est dite anisotrope, le coût associé à un élément de maillage dépend également d'une direction de parcours de cet élément. Dans ce cas, une information de dérivée temporelle est associée à chaque élément de maillage. Par exemple, dans un mode de réalisation, les directions de parcours sont discrétisées, un ensemble de directions de parcours est défini, et une valeur de coût ou une fonction analytique de coût est associée à chaque direction discrétisée pour un élément de maillage donné.

Dans un mode de réalisation de l'étape 42, dans une stratégie de coût isotrope, un nombre N de cartes de coût initiales associées au maillage sont obtenues, et une carte de coût est obtenue par combinaison des cartes de coût initiales, par exemple par combinaison linéaire pondérée par des coefficients de pondération choisis. En variante, la combinaison est obtenue par utilisation d'intégrales de Choquet, par inférence sur un arbre de logique floue ou toute autre méthode de combinaison connue.

Par exemple, pour un maillage isotrope d'une zone de déplacement 2D, on considère 2 cartes de coût initiales qui sont :

- une première carte de coût initiale dans laquelle le coût $k_1$ est fonction de la hauteur du sol, générée à partir d'un modèle numérique de terrain ;
- une deuxième carte de coût initiale dans laquelle le coût $k_2$ consiste à évaluer, pour chaque pixel, un niveau de menace associé.

La carte de coût est alors générée par une combinaison linéaire des cartes de coût initiales, pour chaque élément du maillage (ou pixel) :

[MATH 2]

$$k = \alpha_1 \times k_1 + \alpha_2 \times k_2$$

Avec $\alpha_1$ et $\alpha_2$ des valeurs de coefficients de pondération choisies.

Avantageusement, en faisant varier les valeurs des coefficients de pondération, une variété de cartes de coût est obtenue, ce qui permet d'accroître la richesse topologique des solutions fournies, i.e. permet l'obtention de trajectoires d'allures différentes.

Dans le cas d'une stratégie de coût anisotrope, une combinaison analogue est appliquée pour générer des cartes de coût.

L'étape 42 de calcul de coûts associés au maillage est suivie d'une étape 44 de calcul et mémorisation de deux cartes de coût intégré, en utilisant une méthode de propagation de front d'onde, mettant en œuvre des propagateurs eikonaux.

Les propagateurs eikonaux ont été mis au point pour résoudre analytiquement l'équation eikonale, qui est l'équation régissant le trajet de la lumière dans un milieu, et qui s'écrit de la manière suivante :

[MATH 3]

$$|\nabla u(x)| = \frac{1}{f(x)} \, , x \in \Omega$$

$$u(x) = 0, x \in \partial\Omega$$

Cette équation a été utilisée pour modéliser le déplacement, en partant d'un point racine $x_0$, dans un domaine $\Omega$, 2D ou 3D, où x est une position dans $\Omega$, à vitesse f(x).

Le domaine $\Omega$ est discrétisé sous forme de maillage.

La fonction f(x) définit une vitesse de déplacement, et la fonction u(x) définit la distance entre le point x considéré et le point racine $x_0$.

Dans un mode de réalisation de l'invention, la fonction de coût est l'inverse de f(x) : c(x)=1/f(x).

Dans ce cas, un propagateur eikonal est une solution analytique permettant de calculer, par rapport à point racine, $x_0$, une carte de coût intégré entre $x_0$ et chaque point du domaine $\Omega$, les valeurs de la carte de coût intégré étant dépendantes de la fonction de coût associée aux points du domaine. En d'autres termes, une carte de coût intégré est analogue à une carte de distance au sens de la fonction de coût appliquée. On obtient notamment les courbes isométriques formées par tous les points x du domaine $\Omega$ qui se trouvent à égale distance de $x_0$, au sens de la fonction de coût associée aux points du domaine.

Plusieurs méthodes de résolution analytique de l'équation eikonale ont été proposées.

En particulier, la méthode connue sous le nom de « Fast marching » a été proposée dans l'article « A Fast Marching Level Set Method for Monotonically Advancing Fronts » de J.A. Sethian, 1996.

Cette méthode est par exemple appliquée pour la mise en œuvre de l'étape 44.

En variante, toute méthode de résolution de l'équation eikonale, adaptée pour le maillage de la zone de déplacement, 2D ou 3D, est applicable.

A l'étape 44, le calcul des cartes de coût intégré comprend :

- le calcul d'une première carte de coût intégré associée au point A de départ, i.e. ayant pour point racine de départ le point A, est calculée, en utilisant la carte de coût calculée à l'étape 42 ;
- le calcul d'une deuxième carte de coût intégré associée au point B d'arrivée, i.e. ayant pour point racine d'arrivée le point B, est calculée, en utilisant la carte de coût calculée à l'étape 42 ;

Par exemple, dans le cas d'un maillage 2D régulier et isotrope, la méthode de « fast marching » proposée par J.A Sethian est appliquée pour calculer la première carte de coût intégré et la deuxième carte de coût intégré.

La première carte de coût intégré et la deuxième carte de coût intégré sont mémorisées.

L'étape 44 de calcul des cartes de coût intégré est suivie d'une étape 46 de détermination d'une plage de synchronisation, en fonction d'une contrainte temporelle imposée. Cette étape consiste à calculer les longueurs minimale et maximale de la ou de chaque trajectoire à calculer, entre le point de départ A et le point d'arrivée B.

La contrainte temporelle est une contrainte externe, fonction de l'application dans laquelle le procédé est mis en œuvre.

Les longueurs de trajectoire calculées dépendent également des contraintes de déplacement spécifiques aux appareils mobiles concernés, par exemple la vitesse moyenne ou les vitesses minimale et maximale.

Par exemple, la plage de longueurs données par la formule [MATH 1] est calculée à l'étape 46.

Le procédé comporte ensuite une étape 48 de détermination de points de détour candidats, selon une stratégie de retardement.

Les points de détour candidats sont des points de la zone de déplacement.

Par exemple, dans un mode de réalisation, selon une stratégie de retardement, une grille régulière, ayant un pas de grille associé, de points de détour candidats est testée.

En variante, selon une autre stratégie de retardement, une stratégie multi-résolution est appliquée, en partant d'une grille régulière de premier pas, et en itérant la recherche dans des zones d'intérêt, en formant sur ces zones une grille régulière de deuxième pas, plus fin que le premier pas, par exemple divisé par deux, et ainsi de suite.

Des considérations liées à l'application peuvent également être prises en compte, par exemple le choix d'un point de détour dans une zone présentant un intérêt particulier pour la mission à effectuer, par exemple pour une prise de vues, ou au contraire le choix d'un point de détour pouvant constituer un leurrage pour un observateur tiers.

Les points de détour candidats sont testés pour déterminer des points de détour $C_j$ pour lesquels une trajectoire calculée entre le point de départ A et le point d'arrivée B, passant par le point $C_j$, a une longueur et une durée compatibles avec la contrainte temporelle. La durée de la trajectoire est fonction de la longueur de la trajectoire et de la vitesse de l'appareil mobile. La compatibilité avec la contrainte temporelle est vérifiée si la longueur de la trajectoire respecte la contrainte définie par la formule [MATH 1].

Pour chaque point de détour candidat $C_j$, les étapes 50 à 56 décrites ci-après sont mises en œuvre pour générer une trajectoire détournée et vérifier la compatibilité avec la contrainte temporelle.

La trajectoire, dite trajectoire détournée, est générée en utilisant les première carte de coût intégré et deuxième carte de coût intégré calculées et mémorisées à l'étape 44: une première demi-trajectoire entre le point A et le point $C_j$ est calculée (étape 50) en utilisant la première carte de coût intégré ; une deuxième demi-trajectoire entre le point $C_j$ comme point de départ et le point B comme point d'arrivée est calculée (étape 52) en utilisant la deuxième carte de coût intégré ; les première et deuxième demi-trajectoires sont réunies (étape 54) pour former une trajectoire complète entre A et B, passant par $C_j$.

Chacune des demi-trajectoires est calculée comme étant le chemin le plus court au sens du coût intégré sur l'ensemble de la trajectoire sur la carte de coût intégré considérée, ce chemin étant formé orthogonalement aux courbes isométriques, par une méthode de descente de gradient.

La trajectoire détournée complète est une réunion des deux demi-trajectoires calculées par une méthode de descente de gradient.

L'étape 54 est suivie d'une étape 56 de vérification du critère de longueur.

Un point de détour candidat Cj est retenu si la longueur effective de la trajectoire détournée complète entre A et B, passant par Cj, est comprise dans la plage de longueurs considérée. La longueur effective est la distance à parcourir, en une unité de distance (mètres ou km) le long de la trajectoire calculée.

Par exemple, la vérification 56 consiste à vérifier que la longueur de la trajectoire détournée par $C_j$ satisfait la relation [MATH 1], ce qui équivaut à une durée de trajectoire qui satisfait la contrainte temporelle.

Les étapes 50 à 56 sont itérées sur les points de détour candidats testés.

Les trajectoires ainsi générées avec des points de détour retenus à l'étape 56 sont toutes conformes à la contrainte temporelle imposée, i.e. leurs longueurs entrent dans la plage de longueurs considérée.

Par la suite, pour des raisons applicatives, par exemple de planification de mission, il est possible de choisir une seule ou un sous-ensemble des trajectoires détournées calculées.

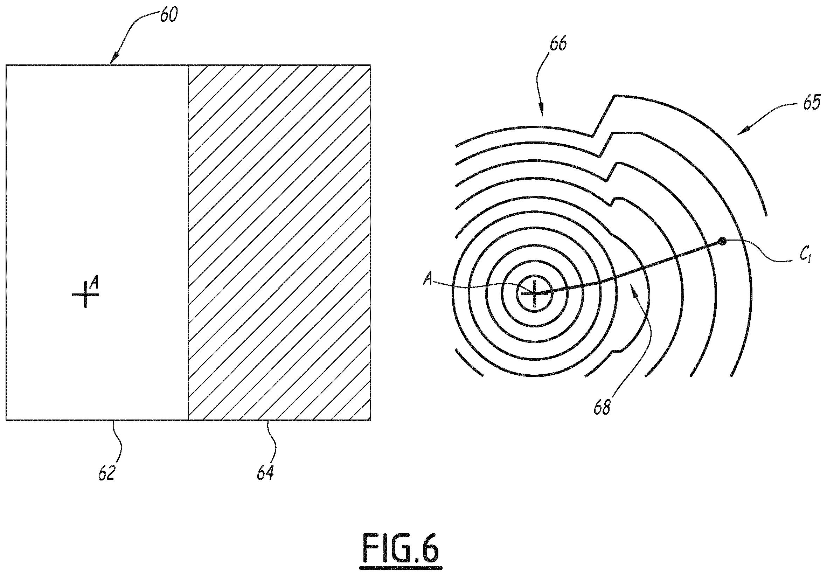

A titre d'exemple simplifié, la figure 6 illustre schématiquement une carte de coût 60, ayant deux sous-parties 62 et 64, chaque sous-partie ayant un coût différent associé, par exemple la sous-partie 62 ayant un coût de 2 par élément du

7

maillage (non représenté à la figure 6), et la sous-partie 64 ayant un coût de 1 par élément de maillage. Par exemple, il s'agit d'un coût de parcours de chaque élément de maillage, la sous-partie 62 correspondant à une zone enneigée, la sous-partie 64 à une zone sans neige.

La première carte de coût intégré 66 calculée avec le point A comme point de départ, en fonction de la carte de coût 60, est illustrée schématiquement. Elle comprend des courbes isométriques 65, i.e. des courbes de points à égale distance du point A au sens de la carte de coût 60.

On a représenté également un point de détour $C_1$ et une demi-trajectoire 68 tracée entre A et $C_1$, qui est le chemin le plus court entre A et $C_1$ au sens de la première carte de coût intégré.

Avantageusement, les trajectoires générées sont continues et optimales par demi-trajectoires.

Avantageusement, le procédé proposé permet de générer des trajectoires respectant une contrainte temporelle donnée sans faire varier la vitesse des appareils mobiles. Cela présente un fort intérêt pratique dans les applications dans lesquelles il n'est pas envisageable de faire ralentir un appareil mobile, pour des raisons techniques (e.g. vitesse de vol minimale imposée) ou pour des raisons contextuelles (e.g. vulnérabilité dans le cas d'appareils mobiles militaires).

Avantageusement, le procédé permet de choisir une stratégie de coût et de choisir librement un ensemble de points de détour, en fonction de critères contextuels et applicatifs.

Avantageusement, une grande variété de cartes de coût peut être testée, ce qui permet de comparer un nombre important de cas de figure, par exemple dans la planification de mission.

Enfin, de manière avantageuse, les calculs des cartes de coût intégré sont effectués une seule fois, ces cartes étant réutilisées pour tester un nombre quelconque de points de détour, ce qui permet une diminution des calculs, et donc une optimisation du temps de calcul. De plus, le test de points de détour et le calcul de trajectoires sont des étapes parallélisables, ce qui permet de réduire massivement le temps de calcul.

## Revendications

1. Procédé de génération de trajectoire d'un appareil mobile, respectant une contrainte temporelle prédéterminée, entre un point de départ et un point d'arrivée, ledit appareil mobile ayant des contraintes de déplacement prédéterminées, le procédé étant mis en œuvre par un processeur d'un dispositif de calcul programmable et comportant des étapes de :

   - calcul (40) d'un maillage d'une zone de déplacement de l'appareil mobile, lesdits point de départ (A) et point d'arrivée (B) appartenant à ladite zone de déplacement, ledit maillage étant formé par un ensemble d'éléments de maillage adjacents,
   - calcul (42) d'une carte de coût associant au moins une valeur de coût à chaque élément de maillage, le procédé étant **caractérisé en ce qu'**il comporte en outre des étapes de :

      - calcul (44) par une méthode de propagation de front d'onde utilisant le maillage et la carte de coût calculée, d'une première carte de coût intégré associée au point de départ, et d'une deuxième carte de coût intégré associée au point d'arrivée,
      - détermination (46-56) d'une trajectoire détournée reliant le point de départ et le point d'arrivée via un point de détour appartenant à la zone de déplacement, en utilisant lesdites première et deuxième cartes de coût intégré, la longueur de la trajectoire détournée déterminée étant compatible avec ladite contrainte temporelle prédéterminée.

2. Procédé selon la revendication 1, dans lequel la détermination de trajectoire comprend :

      - une sélection (48) d'au moins un point de détour dit point de détour candidat, appartenant à la zone de déplacement, et
      - une génération d'une trajectoire reliant le point de départ, le point de détour candidat et le point d'arrivée en utilisant (50) ladite première carte de coût intégré pour calculer une première demi-trajectoire entre le point de départ et le point de détour candidat, et en utilisant (52) ladite deuxième carte de coût intégré pour calculer une deuxième demi-trajectoire entre le point de détour candidat et le point d'arrivée, la trajectoire générée étant formée par la réunion (54) desdites première et deuxième demi-trajectoire,
      - une vérification (56) de compatibilité de la longueur de la trajectoire générée avec ladite contrainte temporelle prédéterminée.

3. Procédé selon la revendication 2, comportant une répétition des étapes de sélection (48) d'un point de détour candidat et de génération (50, 52, 54) de trajectoire, pour une pluralité de points de détour candidats, selon une stratégie de retardement prédéfinie.

4. Procédé selon les revendications 2 ou 3, dans lequel ladite première demi-trajectoire est calculée par une méthode de descente de gradient de manière à obtenir le chemin le plus court, au sens de la première carte de coût intégré, entre le point de départ et le point de détour candidat, et ladite deuxième demi-trajectoire est calculée par une méthode de descente de gradient de manière à obtenir le chemin le plus court, au sens de la deuxième carte de coût intégré, entre le point de détour candidat et le point d'arrivée.

5. Procédé selon l'une des revendications 1 à 4, dans lequel ladite méthode de propagation de front d'onde met en œuvre un propagateur eikonal.

6. Procédé selon les revendications 1 à 5, dans lequel ledit maillage est un maillage régulier.

7. Procédé selon les revendications 1 à 5, dans lequel ledit maillage est un maillage irrégulier.

8. Procédé selon l'une des revendications 1 à 7, dans lequel ledit maillage est isotrope, chaque élément de maillage ayant une valeur de coût ou une fonction de coût analytique associée.

9. Procédé selon l'une des revendications 1 à 7, dans lequel ledit maillage est anisotrope, dans lequel au moins un élément de maillage a une pluralité de valeurs de coût associées, dépendant d'une direction de parcours dudit élément de maillage.

10. Procédé selon l'une des revendications 1 à 9, dans lequel une carte de coût est calculée (42) par combinaison d'une pluralité de cartes de coût initiales selon une stratégie de coût prédéterminée.

11. Procédé selon l'une des revendications 1 à 10, comportant en outre une étape de détermination (46) d'une plage de longueurs de trajectoire satisfaisant la contrainte temporelle et les contraintes de déplacement de l'appareil mobile.

12. Programme d'ordinateur comportant des instructions logicielles qui, lorsqu'elles sont exécutées par un dispositif électronique programmable, mettent en œuvre un procédé de génération de trajectoire conforme aux revendications 1 à 11.

13. Dispositif de génération de trajectoire d'un appareil mobile, respectant une contrainte temporelle prédéterminée, entre un point de départ et un point d'arrivée, ledit appareil mobile ayant des contraintes de déplacement prédéterminées, comportant un processeur configuré pour mettre en œuvre :

- un module (24) de calcul d'un maillage d'une zone de déplacement de l'appareil mobile, lesdits point de départ (A) et point d'arrivée (B) appartenant à ladite zone de déplacement, ledit maillage étant formé par un ensemble d'éléments de maillage adjacents,
- un module (26) de calcul d'une carte de coût associant au moins une valeur de coût à chaque élément de maillage,

le dispositif étant **caractérisé en ce qu'**il comporte en outre :

- un module (28) de calcul par une méthode de propagation de front d'onde utilisant le maillage et la carte de coût calculée d'une première carte de coût intégré associée au point de départ, et d'une deuxième carte de coût intégré associée au point d'arrivée,
- un module (30) de détermination d'une trajectoire détournée reliant le point de départ et le point d'arrivée via un point de détour appartenant à la zone de déplacement, en utilisant lesdites première et deuxième cartes de coût intégré, la longueur de la trajectoire détournée déterminée étant compatible avec ladite contrainte temporelle prédéterminée.

**Patentansprüche**

1. Verfahren zum Erzeugen einer Trajektorie eines sich bewegenden Geräts unter Einhaltung einer vorbestimmten Zeiteinschränkung zwischen einem Startpunkt und einem Endpunkt, wobei das sich bewegende Gerät vorbestimmte Bewegungseinschränkungen aufweist, das Verfahren durch einen Prozessor einer programmierbaren Rechenvorrichtung implementiert wird und die folgenden Schritte umfasst:

- Berechnen (40) eines Netzes eines Bewegungsbereichs des sich bewegenden Geräts, der Startpunkt (A) und der Endpunkt (B) zu dem Bewegungsbereich gehören, das Netz aus einer Anordnung von angrenzenden Netzelementen gebildet ist,
- Berechnen (42) einer Kostenkarte, die mindestens einen Kostenwert mit jedem Gitterelement assoziiert, wobei das Verfahren **dadurch gekennzeichnet ist, dass** es ferner die folgenden Schritte umfasst:

- Berechnen (44), durch eine Wellenfrontausbreitungsmethode, die das Netz und die berechnete Kostenkarte verwendet, einer ersten integrierten Kostenkarte, die mit dem Startpunkt assoziiert ist, und einer zweiten integrierten Kostenkarte, die mit dem Endpunkt assoziiert ist,
- Bestimmen (46-56) einer Umwegtrajektorie, der den Startpunkt und den Endpunkt über einen Umwegpunkt verbindet, der zu dem Bewegungsbereich gehört, unter Verwendung der ersten und der zweiten integrierten Kostenkarte, wobei die Länge der bestimmten Umwegtrajektorie mit der genannten vorbestimmten Zeiteinschränkung kompatibel ist.

2. Verfahren nach Anspruch 1, wobei die Pfadbestimmung Folgendes umfasst:

- Auswählen (48) von mindestens einem Umwegpunkt, dem sogenannten Kandidatenumwegpunkt, der zu dem Bewegungsbereich gehört, und
- Erzeugen einer Trajektorie, die den Startpunkt, den Kandidatenumwegpunkt und den Endpunkt verbindet, durch Verwenden (50) der ersten integrierten Kostenkarte, um einen ersten Halbpfad zwischen dem Startpunkt und dem Kandidatenumwegpunkt zu berechnen, und durch Verwenden (52) der zweiten integrierten Kostenkarte, um eine zweite Halbtrajektorie zwischen dem Kandidatenumwegpunkt und dem Endpunkt zu berechnen, wobei die erzeugte Trajektorie durch die Vereinigung (54) des ersten und der zweiten Halbtrajektorie gebildet wird,
- Überprüfen (56) der Kompatibilität der Länge der erzeugten Trajektorie mit der vorbestimmten Zeiteinschränkung.

3. Verfahren nach Anspruch 2, umfassend eine Wiederholung der Schritte Auswählen (48) eines Kandidatenumwegpunkts und Erzeugen (50, 52, 54) einer Trajektorie für eine Vielzahl von Kandidatenumwegpunkten gemäß einer vordefinierten Verzögerungsstrategie.

4. Verfahren nach Anspruch 2 oder 3, wobei die erste Halbtrajektorie durch eine Gradientenabstiegsmethode berechnet wird, um die kürzeste Trajektorie im Sinne der ersten integrierten Kostenkarte zwischen dem Startpunkt und dem Kandidatenumwegpunkt zu erlangen, und die zweite Halbtrajektorie durch eine Gradientenabstiegsmethode berechnet wird, um den kürzesten Weg im Sinne der zweiten integrierten Kostenkarte zwischen dem Kandidatenumwegpunkt und dem Endpunkt zu erlangen.

5. Verfahren nach einem der Ansprüche 1 bis 4, wobei die Wellenfrontausbreitungsmethode einen eikonalen Propagator implementiert.

6. Verfahren nach den Ansprüchen 1 bis 5, wobei das Netz ein regelmäßiges Netz ist.

7. Verfahren nach den Ansprüchen 1 bis 5, wobei das Netz ein unregelmäßiges Netz ist.

8. Verfahren nach einem der Ansprüche 1 bis 7, wobei das Netz isotrop ist, jedes Netzelement einen Kostenwert oder eine assoziierte analytische Kostenfunktion aufweist.

9. Verfahren nach einem der Ansprüche 1 bis 7, wobei das Netz anisotrop ist, wobei mindestens ein Netzelement eine Vielzahl von assoziierten Kostenwerten aufweist, die von einer Verlaufsrichtung des Netzelements abhängen.

10. Verfahren nach einem der Ansprüche 1 bis 9, wobei eine Kostenkarte durch Kombinieren einer Vielzahl von anfänglichen Kostenkarten gemäß einer vorbestimmten Kostenstrategie berechnet wird (42).

11. Verfahren nach einem der Ansprüche 1 bis 10, ferner umfassend einen Schritt eines Bestimmens (46) eines Bereichs von Trajektorienlängen, die die Zeiteinschränkung und die Bewegungseinschränkungen des sich bewegenden Geräts erfüllen.

12. Computerprogramm, umfassend Softwareanweisungen, die, wenn sie von einer programmierbaren elektronischen Vorrichtung ausgeführt werden, ein Verfahren zum Erzeugen einer Trajektorie gemäß den Ansprüchen 1 bis 11 implementieren.

**13.** Vorrichtung zum Erzeugen einer Trajektorie eines sich bewegenden Geräts, das eine vorbestimmte Zeiteinschränkung einhält, zwischen einem Startpunkt und einem Endpunkt, wobei das sich bewegende Gerät vorbestimmte Bewegungseinschränkungen aufweist, umfassend einen Prozessor, der konfiguriert ist, um Folgendes zu implementieren:

- ein Modul (24) zum Berechnen eines Netzes eines Bewegungsbereichs des sich bewegenden Geräts, wobei der Startpunkt (A) und der Endpunkt (B) zu dem Bewegungsbereich gehören, das Netz aus einem Satz von angrenzenden Netzelementen gebildet ist,
- ein Modul (26) zum Berechnen einer Kostenkarte, die mindestens einen Kostenwert mit jedem Gitterelement assoziiert,

wobei die Vorrichtung **dadurch gekennzeichnet ist, dass** sie ferner Folgendes umfasst:

- ein Modul (28) zum Berechnen, durch eine Wellenfrontausbreitungsmethode, die das Netz und die berechnete Kostenkarte verwendet, einer ersten integrierten Kostenkarte, die mit dem Startpunkt assoziiert ist, und einer zweiten integrierten Kostenkarte, die mit dem Endpunkt assoziiert ist,
- ein Modul (30) zum Bestimmen einer Umwegtrajektorie, die den Startpunkt und den Endpunkt über einen Umwegpunkt verbindet, der zu dem Bewegungsbereich gehört, unter Verwendung der ersten und der zweiten integrierten Kostenkarte, wobei die Länge der bestimmten Umwegtrajektorie mit der genannten vorbestimmten Zeiteinschränkung kompatibel ist.

## Claims

**1.** A method for generating a path of a moving apparatus, meeting a predetermined time constraint, between a point of departure and a point of arrival, said moving apparatus having predetermined movement constraints, the method being implemented by a processor of a programmable computing apparatus and comprises steps of:

- calculating (40) of a grid of a movement zone of the moving apparatus, the point of departure and the point of arrival belonging to the movement zone, the grid being formed by a set of adjacent grid elements,
- calculating (42) a cost map associating at least one cost value with each grid element, the method being **characterized in that** it further comprises the step of:

- calculating (44), by means of a wavefront propagation method using the grid and the calculated cost map, of a first integrated cost map associated with the point of departure and a second integrated cost map associated with the point of arrival,
- determining (46-56) a diverted path linking the point of departure and the point of arrival via a detour point belonging to the movement zone, using the first and second integrated cost maps, the length of the determined diverted path being compatible with the predetermined time constraint.

**2.** The method according to claim 1, wherein the path determination comprises:

- a selection (48) of at least one detour point called candidate detour point, belonging to the movement zone, and
- a generation of a path linking the point of departure, the candidate detour point and the point of arrival using (50) the said first integrated cost map for calculating a first half-path between the point of departure and the candidate detour point, and using (52) said second integrated cost map for calculating a second half-path between the candidate detour point and the point of arrival, the generated path being formed by the joining (54) of said first and second half-path,
- a verification (56) of compatibility of the length of the generated path with said predetermined time constraint.

**3.** The method according to claim 2, including a repeat of the steps of selecting (48) a candidate detour point and of generating (50, 52, 54) a path for a plurality of candidate detour points according to a predefined delay strategy.

**4.** The method according to claims 2 or 3, wherein said first half-path is calculated by a gradient descent method so as to obtain the shortest path, in the sense of the first integrated cost map, between the point of departure and the candidate detour point, and said second half-path is calculated by a gradient descent method so as to obtain the shortest path, in the sense of the second integrated cost map, between the candidate detour point and the point of arrival.

5. The method according to any of claims 1 to 4, wherein said wavefront propagation method uses an eikonal propagator.

6. The method according to claims 1 to 5, wherein said grid is a regular grid.

7. The method according to claims 1 to 5, wherein said grid is an irregular grid.

8. The method according to one of claims 1 to 7, wherein said grid is isotropic, each grid element having an associated cost value or an associated analytical cost function.

9. The method according to one of claims 1 to 7, wherein said grid is anisotropic, wherein at least one grid element has a plurality of associated cost values according to a direction of travel through said grid element.

10. The method according to one of claims 1 to 9, wherein a cost map is calculated (42) by combining a plurality of initial cost maps according to a predetermined cost strategy.

11. The method according to one of claims 1 to 10, further comprising a step of determining (46) a range of path lengths satisfying the time constraint and the movement constraints of the moving apparatus.

12. A computer program including software instructions which, when executed by a programmable electronic system, implement a method for path generation according to claims 1 to 11.

13. A device for generating a path of a moving apparatus, meeting a predetermined time constraint, between a point of departure and a point of arrival, said moving apparatus having predetermined movement constraints, including a processor configured for implementing:

    - a module (24) for calculating a grid of a movement zone of the moving apparatus, said point of departure (A) and point of arrival (B) belonging to said movement zone, said grid being formed by a set of adjacent grid elements,
    - a module (26) for calculating a cost map associating at least one cost value with each grid element, the device being **characterized in that** it further comprises:

    - a module (28) for calculating, by means of a wavefront propagation method using the grid and the calculated cost map, a first integrated cost map associated with the point of departure, and a second integrated cost map associated with the point of arrival,
    - a module (30) for determining a diverted path linking the point of departure and the point of arrival via a detour point belonging to the movement zone, using said first and second integrated cost maps, the length of the diverted path determined being compatible with said predetermined time constraint.

FIG.1

FIG.2

```
┌─────────────────────────────────┐
│   Maillage zone de déplacement  │  ⌇40
└─────────────────────────────────┘
                 │
                 ▼
┌─────────────────────────────────┐
│  Calcul coûts associés au maillage │  ⌇42
└─────────────────────────────────┘
                 │
                 ▼
┌─────────────────────────────────┐
│  Calcul et mémorisation de 2 cartes de │
│    Carte_A, Carte_B basées sur   │  ⌇44
│       « propagateurs eikonaux»   │
└─────────────────────────────────┘
                 │
                 ▼
┌─────────────────────────────────┐
│       Détermination plage        │  ⌇46
│      de synchronisation          │
└─────────────────────────────────┘
                 │
                 ▼
┌─────────────────────────────────┐
│   Détermination points de détour │  ⌇48
│           candidats C            │
└─────────────────────────────────┘
                 │
                 ▼
┌─────────────────────────────────┐
│   Calcul demi-trajectoire A ->C  │  ⌇50
│      en utilisant Carte_A        │
└─────────────────────────────────┘
                 │
                 ▼
┌─────────────────────────────────┐
│   Calcul demi-trajectoire C ->B  │  ⌇52
│      en utilisant Carte_B        │
└─────────────────────────────────┘
                 │
                 ▼
┌─────────────────────────────────┐
│   Combiner les 2 demi-trajectoires │  ⌇54
└─────────────────────────────────┘
                 │
                 ▼
┌─────────────────────────────────┐
│      Vérification contrainte     │  ⌇56
└─────────────────────────────────┘
```

FIG.3

FIG.4

FIG.5

FIG.6

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2128731 A1
- EP 2107005 A1
- FR 2916842 A1
- WO 2010076045 A

**Littérature non-brevet citée dans la description**

- **J M MAUBACH**. Local Bisection Refinement for N-Simplicial Grids Generated by Reflection. *SIAM Journal on Scientific Computing*, 1995
- **J.A. SETHIAN**. *A Fast Marching Level Set Method for Monotonically Advancing Fronts*, 1996